# EUROPÄISCHE PATENTSCHRIFT

(11) **EP 1 939 116 B1**
(45) Veröffentlichungstag und Bekanntmachung des Hinweises auf die Patenterteilung: **13.09.2023**
(21) Anmeldenummer: 07025135.0
(22) Anmeldetag: 05.04.2004
(51) Int. Cl.: F26B 17/26, F27B 7/38, F27D 15/02, F27D 19/00, B65G 25/06

(54) **VORRICHTUNG ZUM KÜHLEN VON GEBRANNTEM SCHÜTTGUT**
DEVICE FOR COOLING FIRED BULK MATERIAL
DISPOSITIF DE REFROIDISSEMENT DE MATIERES CUITES EN VRAC

(30) Priorität: 08.05.2003 EP 03010386
(43) Veröffentlichungstag der Anmeldung: 02.07.2008
(62) Teilanmeldung aus: 04725675.5
(73) Patentinhaber: Claudius Peters Projects GmbH, 21614 Buxtehude (DE)
(72) Erfinder: Meyer, Hartmut, 21401 Thomasburg (DE); Staak, Thomas, 22391 Hamburg (DE); Wallace, Archibald, 20249 Hamburg (DE); Wallis, Helmut, 24558 Henstedt-Ulzburg (DE)
(74) Vertreter: Glawe, Delfs, Moll

(56) Entgegenhaltungen:
- EP-A2- 0 718 578
- WO-A1-02/075230
- DE-B- 1 296 087
- DK-A- 140 399
- US-A- 1 491 811
- US-A- 3 534 875
- US-A- 5 222 593
- WALSH F-E: "ADVANCES IN RECIPROCATING GRATE COOLERS", ZKG INTERNATIONAL, BAUVERLAG BV., GETERSLOH, DE, Bd. 47, Nr. 5, 1. Mai 1994 (1994-05-01), Seiten 252-256, XP000444715, ISSN: 0949-0205

## Beschreibung

Es ist bekannt, ein Schüttgutbett dadurch mit Gas zu behandeln, dass es kontinuierlich über einen Rost gefördert wird und dabei von dem Gas durchströmt wird. Zum Kühlen von Brenngut, beispielsweise Zementklinker verwendet man vornehmlich sogenannte Schubroste, die aus einander überlappenden Reihen von wechselnd feststehenden und in Förderrichtung vor- und zurückbewegten Rostplatten bestehen (DE-A-3 734 043). Durch die Rostplatten wird Kühlluft in das Gutbett eingeblasen und oberhalb der Gutschicht zur Wärmerückgewinnung abgeführt. Schubroste verlangen für einen wirtschaftlichen Betrieb eine aufwendige Lagerung der bewegten Teile und sind auch wegen ihrer relativen Kleinteiligkeit aufwendig. Eine andere bekannte Rostbauart bedient sich eines stationären, luftdurchlässigen Tragbodens, über den die Gutschicht mittels kontinuierlich in Förderrichtung bewegter Kratzer oder hin- und hergehender Schuborgane bewegt wird (EP-A-718 578; DE-A-10018142). Die Kratzer oder Schuborgane müssen von unten durch die Rostfläche beweglich hindurch geführt werden, was aufwendig ist. Außerdem sind sie innerhalb der heißen Gutschicht hohem Verschleiß ausgesetzt. In demjenigen Rostbereich, in welchem sie und ihre Antriebs- und Dichtungsorgane sich befinden, ist der Luftdurchgang behindert und die Kühlwirkung eingeschränkt. Eine wieder andere Kühlerbauart (DE-A-101 13 516) benutzt einen großflächigen Rost, der in seiner Gesamtheit vor- und zurückbewegt wird, wobei während des Rückhubs das Gutbett durch eine am Beginn des Rostes angeordnete Stauplatte festgehalten wird, so dass der Rost darunter zurückgleiten kann. Das hat den Nachteil, dass die nutzbare Rostlänge wegen der Begrenztheit der Stauwirkung begrenzt ist. Auf demselben Prinzip beruht ein anderer bekannter Kühler (WO02/23112), bei dem mehrere in Förderrichtung vor- und zurückbewegte Roste hintereinander angeordnet sind, denen jeweils eine Stauplatte zugeordnet ist. Diese Roste können aus mehreren nebeneinander angeordneten Planken zusammengesetzt sein, die unabhängig voneinander mit unterschiedlicher Fördergeschwindigkeit angetrieben sind.

Die DK 1999/01403 A beschreibt einen Brenngutkühler, bei dem der von unten nach oben von Kühlgas durchströmte Rost mehrere in Förderrichtung langgestreckte Planken umfasst, die in Förderrichtung hin- und zurückgehend derart angetrieben werden, dass wenigstens zwei benachbarte Planken gleichzeitig vor und ungleichzeitig zurück bewegt werden. Zwischen den Planken sind ineinandergreifende L-förmige Dichtungen vorgesehen.

Ausgehend von dem letztgenannten Stand der Technik liegt der Erfindung die Aufgabe zugrunde, eine Vorrichtung zum Behandeln, insbesondere Kühlen einer auf einem Rost ruhenden und von einem Gasstrom durchzogenen Schüttgutschicht zu schaffen, die auch bei großer Rostlänge einen wirtschaftlichen Aufbau und Betrieb sowie eine gleichmäßige Gutbehandlung versprechen.

Die erfindungsgemäße Lösung besteht in den Merkmalen des Anspruchs 1 sowie vorzugsweise denjenigen der Unteransprüche.

Die Erfindung wird durch die Ansprüche definiert. Aspekte dieser Beschreibung, die nicht unter die Ansprüche fallen, dienen nur der Erläuterung und sind nicht Teil der Erfindung.

Die erfindungsgemäße Vorrichtung verwendet einen Rost, der aus mehreren in Förderrichtung langgestreckten Planken besteht. Mehrere dieser Planken werden in Förderrichtung vor- und zurückbewegt, um das Gut in Förderrichtung zu bewegen. Die Bewegung ist so gesteuert, dass jede einzelne Planke sich jeweils gemeinsam mit wenigstens einer benachbarten Planke in Förderrichtung vorbewegt und jeweils ungleichzeitig mit den benachbarten Planken zurückbewegt. Dabei ist die Breite der Planken so gering bemessen, dass während der Rückwärtsbewegung einer Planke die auf das darüberliegende Gut ausgeübte rückwärts-Förderwirkung, die auf der Reibung zwischen der betreffenden Planke und dem Gut beruht, geringer ist als die vorwärts-Förderwirkung oder Haltewirkung, die auf der Reibung beruht, die von dem jeweils benachbarten Gut bzw. von den Seitenwänden ausgeübt wird. Das hat die Folge, dass dann, wenn eine Planke sich zwischen zwei still stehenden Planken zurück bewegt, der über ihr liegende Gutstreifen von dem über den benachbarten Planken liegenden Gut großenteils oder vollständig festgehalten wird und er also insoweit nicht der einzeln zurück bewegten Planke folgt. Wenn sich zwei oder mehr benachbarte Planken mit dem darauf liegenden Gut gleichzeitig in Förderrichtung bewegen und eine einzelne Planke zwischen sich einschlie-ßen, die still steht oder sich entgegengesetzt bewegt, nehmen sie auch den auf dieser Planke liegenden Gutstreifen mit oder wenigstens einen wesentlichen Teil desselben. Durch geeignete Bewegungssteuerung, bei der der Rückhub jeder Planke so gesteuert ist, dass die benachbarten Planken das auf ihr liegende Gut festhalten, während der Vorwärtshub immer gleichzeitig von mehreren benachbarten Planken ausgeführt wird, wird das Gutbett in Förderrichtung transportiert.

Dieses Förderprinzip ist seit langer Zeit bekannt (DE-B-1 296 087, US-A-3 534 875, US-A-4 144 963). Auf dem Gebiet der Fördertechnik spielt es keine große Rolle, weil es im allgemeinen einfacher ist, die Gutschicht mittels oberhalb der Stützfläche bewegter Kratzer oder Schuborgane zu bewegen. Zweckmäßigerweise sind oberhalb des Rosts keine Förderorgane vorhanden, die dort dem ggf. aggressiven Angriff der Behandlungsatmosphäre oder des Guts ausgesetzt wären. Ein weiterer Vorteil kann darin bestehen, dass die durch die Förderbewegung auf das Gutbett ausgeübte Mischwirkung gering ist. Das hat zur Folge, dass das Behandlungsgas im Falle eines Kühlprozesses zuletzt die heißesten Schichten durchquert und dadurch ein besserer Wärmerückgewinn erreicht wird, als es bei lebhafterer vertikaler Durchmischung des Betts möglich ist. Entsprechendes gilt für andere Arten des Wärme- oder Stoffaustauschs. Wenn jedoch eine stärkere Gutbewegung erwünscht ist, beispielsweise zur Vermeidung des Zusammenbackens, kann diese dadurch herbeigeführt werden, dass die Vorwärtsförderung nicht gleichmäßig über die gesamte Rostbreite sondern abschnittsweise stattfindet, so dass zwischen den Abschnitten eine Relativbewegung erzeugt wird. Eine andere Möglichkeit, das Gut stärker zu bewegen, besteht darin, dass eine höhere Rostfrequenz gewählt wird. Schließlich kann durch stationäre, in das Bett hineinragende Einbauten eine Bewegung innerhalb des Gutbetts erzeugt werden.

Zweckmäßigerweise ist der Rückhub schneller als der Vorhub. Ferner kann es zweckmäßig sein, wenn sich ständig die Mehrzahl der Planken mit gleicher Geschwindigkeit in Förderrichtung bewegt. Dadurch lässt sich erreichen, dass sich die Gutschicht ständig mit im wesentlichen konstanter Geschwindigkeit bewegt, ohne dass durch Stillstand und Wiederanfahren Energieverluste oder störende Erschütterungen entstehen.

Bei einem Brenngutkühler kann es zweckmäßig sein, mindestens eine randnahe Planke mit geringerer Frequenz und/oder Amplitude als die weiter innen liegenden Planken zu bewegen, um dadurch zu verhindern, dass das Gut am Rand des Betts unerwünscht rasch fließt. Stattdessen oder zusätzlich können stationäre Randplanken vorgesehen sein. Auch die übrigen, bewegten Planken können hinsichtlich Frequenz und Amplitude unterschiedlich geregelt sein, damit unterschiedlichen Materialanforderungen über die Breite des Rosts Rechnung getragen werden kann. Je nach Art des dem Kühler vorgeschalteten Brennofens und des Ofenabwurfs besteht nämlich die Möglichkeit, dass die Eigenschaften des Guts über die Breite des Betts nicht gleich sind. Um trotzdem gleiche oder je nach den Umständen auch gezielt unterschiedliche Fördergeschwindigkeit zu erreichen, kann es deshalb erwünscht sein, dass die Förderbewegungen der Planken in einem Teil des Rosts intensiver sind als in einem anderen. Eine unterschiedliche Förderwirkung der Planken kann auch dadurch erzielt werden, dass einzelne von ihnen von Zeit zu Zeit am Hub der sonst gemeinsam mit ihnen bewegten Planken nicht teilnehmen. Beispielsweise kann vorgesehen sein, dass eine Planke nur an jedem zweiten Förderhub der benachbarten Planke teilnimmt oder dass bei ihr jeder siebte Förderhub ausfällt.

Schließlich besteht die Möglichkeit, in solchen Bereichen, in denen erfahrungsgemäß das Gut zu höherer Geschwindigkeit oder gar zum Durchschießen neigt, geeignete Bremsen anzubringen, die von stationären Hindernissen gebildet sind. Beispielsweise können zwischen benachbarten Planken stationäre Zwischenplanken vorgesehen werden, die gegebenenfalls auch mit in das Gutbett hineinragenden Strömungshindernissen versehen sind. Es können auch von den Seitenwänden her über den Rost ragende Einbauten angebracht werden, so dass der einheitliche Aufbau des Bodens durch Einbauten nicht gestört zu werden braucht. Die von der Seite her über den Rost ragenden Einbauten können eine Höhe haben, die geringer ist als die normale Betthöhe, so dass sie ständig in das Bett eingreifen, um dessen Randbereiche an rascherer Strömung zu hindern. Wenn es nur darum geht, das Durchschießen von Material oberhalb des normalen Betts zu verhindern, wird ihre Höhe so gewählt, dass sie sich dort befinden, wo ein solches Durchschießen zu erwarten ist, also oberhalb der normalen Betthöhe.

In einem Ausführungsbeispiel, das nicht Teil der Erfindung ist, ist zweckmäßigerweise der Spalt zwischen benachbarten Planken gegen Rostdurchfall und/oder Gasdurchtritt abgedichtet. Für die Abdichtung wird vorzugsweise eine Labyrinthdichtung verwendet, bei welcher eine Längsleiste, die an dem Rand der Planke befestigt ist, eintaucht in eine Schüttung des Guts, die von der benachbarten Planke oder einer besonderen Rinne gehalten wird. Es ist eine einfache Ausführung dieses Prinzips bekannt (US-A-5,222,593), bei welcher vom Rand der einen Planke eine Randleiste hoch steht, die von einer nach unten ragenden Randleiste der anderen Planke übergriffen wird. In diesem Fall befindet sich die Abdichtung aber im aggressiven Bereich des zu behandelnden Guts. Bevorzugt wird deshalb eine Ausführung, bei welcher die Dichtanordnung unterhalb der Planken angeordnet ist. In diesem Fall ist am Rand der einen Planke oder gesondert stationär eine nach oben sich öffnende Längsrinne angeordnet, die im Betrieb eine Schüttung des Guts aufnimmt. Vom Rand der Planke ragt eine Längsleiste in diese Rinne und in die darin sich bildende Schüttung hinein. Gemeinsam bilden diese Teile eine Abdichtung gegen den Durchtritt von Schüttgut, das durch den zwischen den Planken befindlichen Spalt in die Rinne gelangt. Außerdem bildet die Anordnung eine Abdichtung oder wenigstens ein Strömungshindernis für Gas zwischen dem Rostunterraum und dem Rostoberraum. Ein begrenzter Gasdurchtritt kann erwünscht sein, damit die angestrebte Gasbehandlung im Gutbett auch oberhalb dieser Abdichteinrichtung stattfinden kann. Dafür wird es in vielen Fällen ausreichen, wenn eine Seite der nach oben offenen Rinne mit dem Rostunterraum verbunden ist.

Nach einem besonderen Merkmal ist die Abdichteinrichtung oder eine zwischen zwei benachbarten Planken befindliche, stationäre Zwischenplanke von einer stationären Wand getragen, die die Rostunterräume unter den benachbarten Planken voneinander trennt. Dadurch wird es möglich, das Gut, das auf benachbarten Planken liegt, unterschiedlich stark zu belüften.

In einem Ausführungsbeispiel, das nicht Teil der Erfindung ist, sollte die vom Rand einer Planke in die Rinne hinabragende Leiste während des Betriebs stets hinreichenden Abstand von den Rinnenwänden einhalten, damit nicht das Gut zwischen der Leiste und einer Rinnenwand zerquetscht wird. Dies kann man dadurch erreichen, dass der seitliche Abstand zwischen der Leiste und den Rinnenwänden größer ist als das seitliche Führungsspiel der Planken einschließlich etwaiger Wärmedehnung. Ferner kann es zu demselben Ziel zweckmäßig sein, dass der Spalt zwischen der Leistenunterkante und dem Rinnenboden kleiner ist als der Spalt zwischen der Leiste und der Rinnenwand.

In einem Ausführungsbeispiel, das nicht Teil der Erfindung ist, kann, wenn die Rinne stationär vorgesehen ist, von jeder der beiden gegeneinander abzudichtenden Plankenränder eine Längsleiste in diese Rinne hinabragen. Es besteht aber auch die Möglichkeit, die Rinne mit dem Rand der einen Planke und die hinabragende Leiste mit dem Rand der anderen Planke zu verbinden.

In einem Ausführungsbeispiel, das nicht Teil der Erfindung ist, wird derjenige Teil der Rinne, der unmittelbar mit dem Plankenspalt in Verbindung steht, in der Regel vollständig mit Schüttgut gefüllt sein. Während der Relativbewegung der Leiste und der Rinne zueinander, wird auch etwas Schüttgut unter der Leiste zur anderen Seite durchtreten. Der vertikale Abstand zwischen der unteren Leistenkante und dem Rinnenboden sollte gering sein, damit dieser Übertritt des Guts gehemmt wird. Außerdem sollten die Rinnenwände hoch genug sein, um ein Überlaufen des Guts in den Rostunterraum sicher zu verhindern. Ein solcher Überlauf ist deshalb unwahrscheinlich, weil die Rinne sich ständig selbst entleert. Weil die Leisten benachbarter Planken sich gemeinsam vor und einzeln zurück bewegen, wird die in der Rinne befindliche Materialschüttung stärker in Förderrichtung als zurück bewegt und aus dem Rinnenende, das zu diesem Zweck offen sein sollte, herausgeschoben. Weil nicht befürchtet werden muss, dass das Material sich rückwärts bewegt, darf das hintere, dem Aufgabeende des Rosts benachbarte Ende der Rinne offen sein.

Es ist üblich, dem Rost eines Brenngutkühlers einen kurzen Rostabschnitt vorzuschalten, dessen Aufgabefläche für die unmittelbare Aufnahme des vom Ofen herabfallenden Guts besonders geeignet ist und der im Folgenden als Aufgabeabschnitt bezeichnet wird. Die aufgabeseitigen Enden der Planken des erfindungsgemäßen Rostabschnitts bewegen sich während ihres Schubs mehr oder weniger weit unter den Aufgabeabschnitt. Für die Relativbewegung benötigen sie Spiel zwischen ihrer Oberseite und der Unterseite des Aufgabeabschnitts. Um zu vermeiden, dass kühle Luft aus dem überdruckbeaufschlagten Rostunterraum durch dieses Spiel in das Gutbett eintritt, ohne den Rost durchströmt und gekühlt zu haben, ist zweckmäßigerweise eine Dichtanordnung vorgesehen, in deren Bereich dieses Spiel verringert ist.

Zweckmäßigerweise ist die Oberseite des Rosts im Wesentlichen vollflächig mit Mulden versehen, in denen sich abgekühltes Gut fängt und den unmittelbaren Kontakt des Rosts mit heißen Gutschichten verhindert. Auch die aufgabeseitigen Enden der Planken sind zweckmäßigerweise mit solchen Mulden ausgerüstet. Wenn sie unter den Aufgabeabschnitt des Kühlers fahren und dort nicht mehr vom Gutbett belastet ist, besteht die Gefahr, dass das von unten in die Mulden eindringende Behandlungsgas den Muldeninhalt oder wenigstens das Feingut herausbläst. Nach einem weiteren Merkmal ist deshalb vorgesehen, dass die Luftdurchtrittsöffnungen der Mulden von der Luftzufuhr abgesperrt sind, wenn sie sich unter dem Aufgabeabschnitt des Kühlers befinden.

Ein wichtiger Vorteil der Erfindung besteht darin, dass der Verschleiß des Rosts und seiner Lagerorgane seine Funktion nicht beeinträchtigt. Die Lagerorgane können daher einfach gestaltet sein. Beispielsweise kann der Rost auf Rollen gelagert werden.

Die Erfindung wird im Folgenden näher unter Bezugnahme der Zeichnung erläutert, die die Erfindung unter anderem anhand von Ausführungsbeispielen, die nicht Teil der Erfindung sind, veranschaulicht. Es zeigen:
- Fig. 1: einen schematischen Längsschnitt durch einen Brenngutkühler,
- Fig. 2: schematische Teil-Draufsichten auf den Kühlrost einer ersten Ausführungsform in unterschiedlichen Funktionsstadien,
- Fig. 3: Draufsichten entsprechend Fig. 2 auf eine zweite Ausführungsform,
- Fig. 4: einen Teil-Längsschnitt einer ersten Ausführungsform des Kühlers,
- Fig. 5: einen der Fig. 4 entsprechenden Längsschnitt einer zweiten Ausführungsform des Kühlers,
- Fig. 6: einen Querschnitt durch einen Kühler,
- Fig. 7: einen Teilschnitt durch eine Dichtungsanordnung in größerem Maßstab, die nicht Teil der Erfindung ist,
- Fig. 8 u. Fig. 9: weitere Ausführungsbeispiele von Dichtungsanordnungen, die nicht Teil der Erfindung sind,
- Fig. 10 u. Fig. 11: einen Querschnitt und eine isometrische Darstellung einer weiteren Ausführungsform, die nicht Teil der Erfindung ist,
- Fig. 12: eine weitere Bauform der Dichtung, die nicht Teil der Erfindung ist,
- Fig. 13: Einzelheiten der Abdichtung zwischen den Rostabschnitten, und
- Fig. 14: ein erfindungsgemäßes Ausführungsbeispiel einer Dichtungsanordnung.

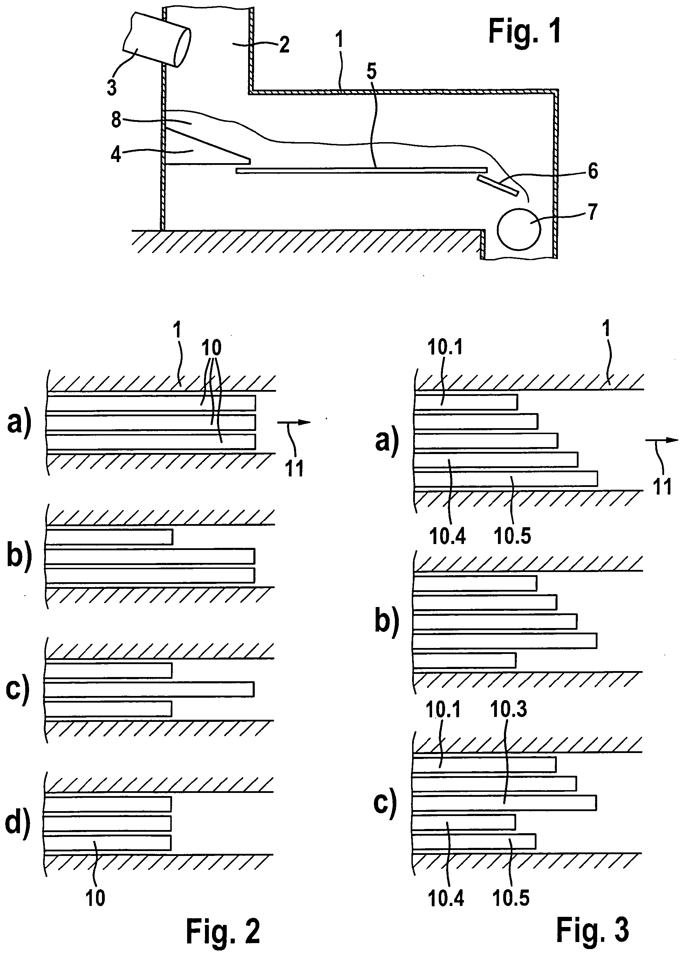

Gemäß Figur 1 bildet ein Kühlergehäuse 1 einen Aufgabeschacht 2, in welchem das Ende eines Drehrohrofens 3 mündet. Im Aufgabeschacht 2 fällt das Gut 8 auf einen Aufgabeabschnitt 4 des Kühlers und gelangt von dort auf den Rostabschnitt 5, der erfindungsgemäß ausgebildet und betrieben ist. Wenn im Folgenden ohne ergänzende Definition vom Rost die Rede ist, so ist dieser Rostabschnitt gemeint. Es soll nicht ausgeschlossen sein, dass diesem Rostabschnitt anders ausgebildete Rostabschnitte folgen oder vorgeschaltet sind. Der Rost 5 ist im Wesentlichen horizontal angeordnet. Man kann ihn leicht abfallend anordnen, um dadurch den Widerstand zu erhöhen, durch den das Gut beim Zurückgehen einer Rostplanke daran gehindert wird, ihr zu folgen. Hingegen wird die Gutbewegung in Förderrichtung erleichtert und der zur Förderung erforderliche Energieaufwand gesenkt. Der Rost 5 kann aber auch leicht ansteigend verlegt sein, wenn es darum geht, das gelegentliche Durchschießen von leicht fließendem Material ("Red River") zu verhindern. Am Ende des Rosts 5 kann das Gut unmittelbar oder über einen weiteren Rostabschnitt 6 abgeführt werden, beispielsweise zu einem Brecher 7.

Der Rost 5 setzt sich aus einer Mehrzahl parallel nebeneinander angeordneter Planken 10 zusammen. Beispiele mit drei bzw. fünf Planken sind in Fig. 2 und 3 schematisch dargestellt. Aufeinanderfolgende Funktionsphasen veranschaulichen darin die Bewegungsreihenfolge der Planken.

Fig. 2a stellt alle drei Planken 10 in ihrer in Förderrichtung 11 am weitesten vorgeschobenen Stellung dar. In dieser Stellung stoppt ihre Vorwärtsbewegung. Danach werden sie einzeln zurückgefahren, wie dies in den Darstellungen Fig. 2b, c und d dargestellt ist. Sobald sie alle die in Fig. 2d angegebene, am weitesten zurückgefahrene Stellung eingenommen haben, beginnen sie wieder mit dem gemeinsamen Vorschub, bis sie wieder die Stellung gemäß Fig. 2a erreicht haben. Während des gemeinsamen Vorschubs nehmen sie das auf ihnen liegende Gutbett mit. Wenn die Planken einzeln zurückgefahren werden, kann das auf ihnen liegende Gut größtenteils nicht folgen, weil es durch die Reibung festgehalten wird, die von dem Gut, das auf den benachbarten Planken liegt, bzw. von den Seitenwänden darauf ausgeübt wird. Bei der in Fig. 2 dargestellten Bewegungsfolge wird vorausgesetzt, dass in derjenigen Bewegungsphase, in der die Planken einzeln zurückgefahren werden, die übrigen jeweils stillstehen.

Die in Fig. 3 dargestellte Bewegungsfolge beruht hingegen auf der Annahme, dass sämtliche Planken mit Ausnahme jeweils einer Planke, die zurückgefahren wird, sich gleichmäßig vorwärts bewegen. Fig. 3a stellt den Zustand dar, in welchem die Planke 10.1, die soeben zurückgezogen wurde, sich in ihrer hintersten Stellung befindet, während die Planke 10.5 ihre vorderste Stellung erreicht hat. In der Zeit bis zum nächsten Zustandsbild in Fig. 3b bewegen sich alle Planken 10.1 bis 10.4 langsam synchron vorwärts, während die Planke 10.5 sich in die hintere Ausgangsstellung zurückzieht. In der nächsten Phase bis zum Zustandsbild 3c wandern die Planken 10.1 bis 10.3 und 10.5 um einen Schritt vorwärts, während die Planke 10.4 sich in die hintere Ausgangsstellung zurückzieht, und so fort. Wenn die Vorwärtsbewegung kontinuierlich sein soll, muss die Rückzugsbewegung in diesem Beispiel mindestens fünfmal so rasch wie die Vorwärtsbewegung sein.

In den Beispielen der Fig. 2 und 3 wurde vorausgesetzt, dass sämtliche Planken gleiche Vorschubgeschwindigkeit haben. Dies ist nicht erforderlich. Vielmehr kann die Vorschubgeschwindigkeit der einzelnen Planken unterschiedlich geregelt sein oder von vornherein unterschiedlich festgelegt sein. Beispielsweise gibt es die bereits erwähnten technischen Gründe, die randnahen Planken 10.1 und 10.5 langsamer zu bewegen als die mittennäheren Planken.

Ferner wurde in den Beispielen vorausgesetzt, dass die Planken einzeln zurückgezogen werden. Doch ist es auch möglich, zwei Planken gleichzeitig zurückzuziehen, wenn sie hinreichende Entfernung voneinander haben und die übrigen Planken dazu ausreichen, das über den zurückzuziehenden Planken befindliche Gut festzuhalten. Beispielsweise könnte im Beispiel gemäß Fig. 3 vorgesehen sein, dass die Planken 10.1 und 10.4 einerseits sowie die Planken 10.2 und 10.5 andererseits je gleichzeitig zurückgezogen werden. Das gilt sowohl für die unter Bezugnahme auf Fig. 3 erläuterte kontinuierliche Arbeitsweise als auch für die unter Bezugnahme auf Fig. 2 erläuterte diskontinuierliche Arbeitsweise.

In Fig. 2 und 3 wurde einfachheitshalber vorausgesetzt, dass die Planken unmittelbar aneinander und an die Wände des Kühlergehäuses 1 grenzen. Dies ist nicht unbedingt erforderlich. Beispielsweise kann es bei fallend geneigter Anordnung des Rosts zweckmäßig sein, zwischen den einzelnen bewegten Planken stationäre Streifen oder Planken anzuordnen, die bremsend auf das Gut wirken, um ein Durchschießen zu verhindern. Ferner kann es bei horizontaler oder fallend geneigter Anordnung des Rosts sinnvoll sein, je einen unmittelbar an die Wände 1 grenzenden Randstreifen unbewegt zu halten.

Durch Einbauten kann der Widerstand, den das Gut bei einer Bewegung entgegen der Förderrichtung vorfindet, zusätzlich erhöht werden. Beispielsweise kann vorgesehen sein, dass der Abstand zwischen den Seitenwänden des Kühlergehäuses 1 oder zwischen zusätzlichen Einbauten sich entgegen der Förderrichtung 11 verjüngt.

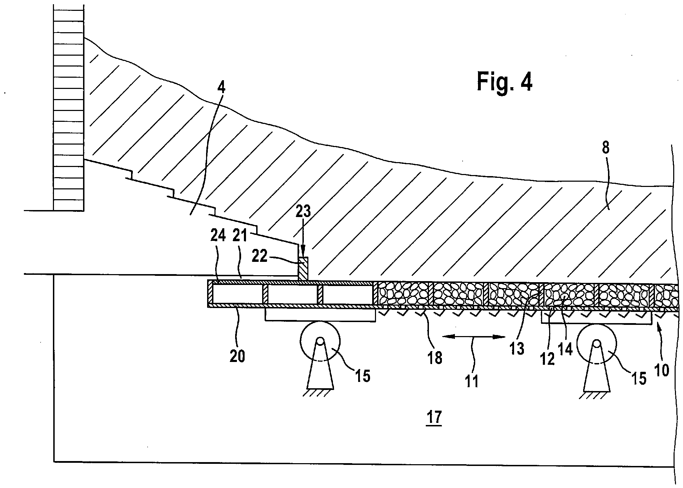

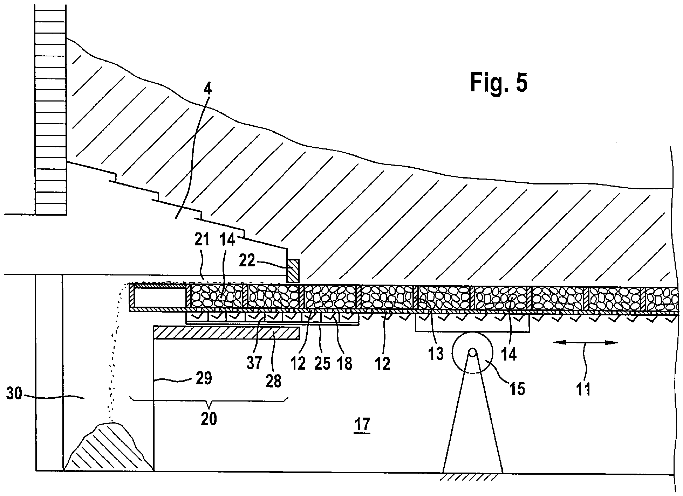

Die Planken 10 enthalten Luftdurchtrittsöffnungen 12 in möglichst gleichmäßiger Verteilung. Für ihre Ausbildung und Anordnung gelten die Erfahrungen, die von anderen Typen von Kühlrosten bekannt sind. Gemäß Fig. 4 und 5 sind auf der Plankenoberseite durch Querwände 13 Mulden 14 voneinander abgeteilt, die so bemessen sind, dass darin Schüttgut festgehalten wird. Dies bildet eine Schutzschicht gegenüber dem darüber befindlichen heißen und abrasiven Gutbett. Auch dies ist von anderen Kühlerbauarten bekannt.

Auf die Mulden 14 kann verzichtet werden, wenn das Gut weniger abrasiv ist oder wenn die Oberfläche der Planken 10 hinreichend verschleißfest ausgerüstet ist. Man kann auf diese Weise den Reibungskoeffizienten zwischen Rost und Gut beeinflussen. Dies kann auch in unterschiedlicher Weise über die Breite des Rosts geschehen, wenn man wünscht, dass das Gut in bestimmten Breitenbereichen stärker von der Reibung des benachbarten Guts als von der darunter befindlichen Planke beeinflusst wird.

In Fig. 4 und 5 ist vorausgesetzt, dass der Rostunterraum 17 mit Überdruck beaufschlagt wird und dadurch die Kühlluft vom Rostunterraum durch die Rostöffnungen 12 und durch das Gutbett 8 gedrückt wird. Damit etwa nach unten durch die Rostöffnungen 12 hindurchfallende Partikel nicht in den Rostunterraum 17 gelangen, befinden sich unter den Öffnungen 12 bekannte Fangprofile 18, die den Rostdurchfall auffangen und ihm die Möglichkeit geben, durch die Luftströmung wieder nach oben in die Schüttung zurückgeführt zu werden.

Statt der Belüftung des Rosts durch Überdruck im Rostunterraum können die Planken auch insgesamt oder abschnittsweise über flexible Kanäle mit Druckluftquellen verbunden werden. Dies gibt die Möglichkeit, das Gutbett in unterschiedlichen Breiten- und Längenbereichen unterschiedlich zu belüften.

Die Planken 10 können auf Rollen 15 gelagert sein. Sie sind mit einem nicht dargestellten Antrieb verbunden, der es gestattet, sie in Förderrichtung 11 vorzuschieben und wieder zurückzuziehen.

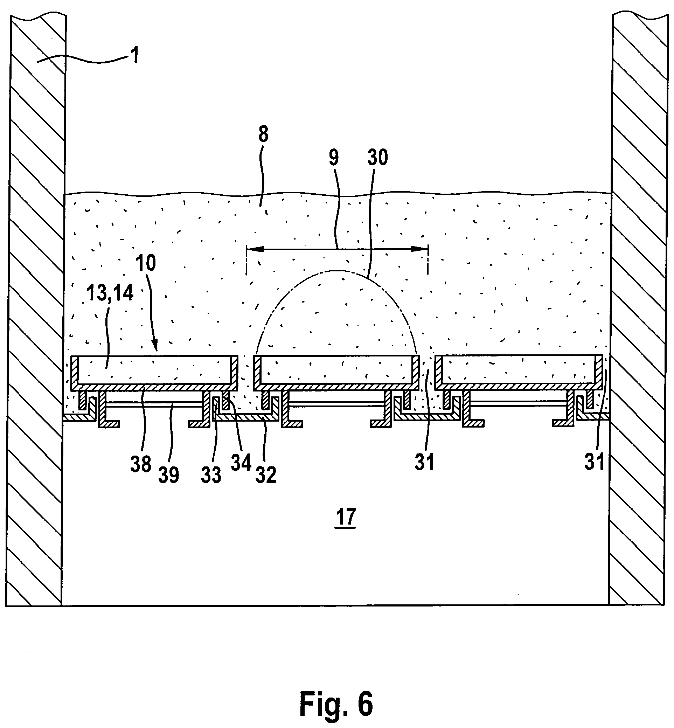

In der Schnittansicht von Fig. 6 erkennt man im Kühlergehäuse 1 den Querschnitt von drei Planken 10, deren Oberseite von den durch Wände 13 abgeteilten Mulden 14 gebildet ist und auf denen das Schüttgutbett 8 liegt. Bewegliche Bauteile sind von links unten nach rechts oben und feststehende von links oben nach rechts unten schraffiert. Die Breite 9 der einzelnen Planken ist so bemessen, dass die Bewegung des darüber liegenden Teils der Gutschicht 8 in Förderrichtung bzw. entgegen der Förderrichtung stärker durch die Reibung der benachbarten Gutbereiche bzw. der Wände 1 bestimmt wird, als durch die zugehörige Planke 10. Genauer betrachtet, lässt sich nicht verhindern, dass ein nahe der Plankenoberfläche befindlicher Gutbereich (etwa der Bereich unter der strichpunktierten Linie 30) an der Bewegung der Planke je nach Abstand von der Planke mehr oder weniger teilnimmt. Jedoch wird ein großer Teil des über der Planke befindlichen Guts an der Rückbewegung der Planke nicht teilnehmen, wenn die benachbarten Planken stillstehen oder in der Gegenrichtung bewegt werden.

Je höher das Gutbett im Vergleich mit der Plankenbreite ist, umso größer ist der Einfluss der Reibung des benachbarten Guts bzw. der Kühlerwand auf das über der Planke liegende Gut im Vergleich mit dem von der Reibung der Planke herrührenden Einfluss. Die Fördereffizienz steigt also mit größer werdendem Verhältnis der Betthöhe zur Plankenbreite. Zweckmäßigerweise wird das Verfahren so betrieben, dass dieses Verhältnis nicht kleiner als 0,7, vorzugsweise nicht kleiner als 0,9 ist bzw. wird die Plankenbreite so gewählt, dass sie nicht größer ist als der Kehrwert dieser Zahl, bezogen auf die projektierte Betthöhe. Vorzugsweise liegt das Verhältnis von Betthöhe zu Plankenbreite im Bereich von 1 bis 1,2.

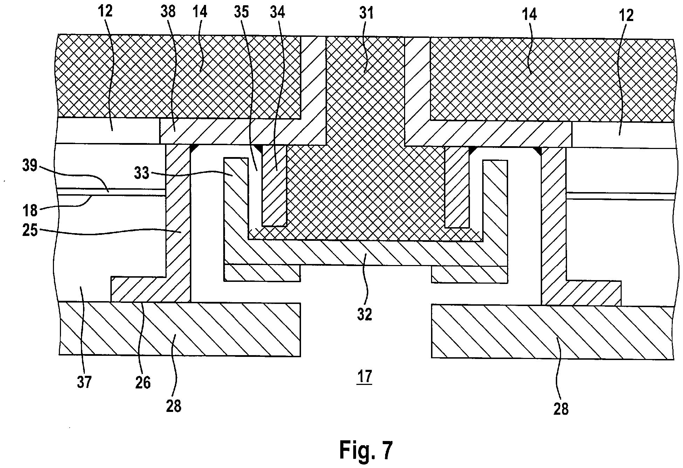

In einem Ausführungsbeispiel, das nicht Teil der Erfindung ist, befindet sich zwischen den Planken 10 bzw. zwischen den randnahen Planken und der Wand 1 ein Spalt 31, durch den Gut nach unten dringen kann. Unterhalb des Spalts 31 ist stationär eine Rinne 32 mit Wänden 33 angeordnet, die das durchfallende Gut aufnimmt. An den Planken 10 ist nahe deren Rand je eine nach unten ragende Leiste 34 angeordnet, die in die Rinne 32 taucht und deren Unterkante nur geringen Abstand vom Boden der Rinne 32 hat. Das in Fig. 7 durch Kreuzschraffur angedeutete Gut kann daher nicht widerstandslos in den Zwischenraum 35 zwischen den Rinnenwänden 33 und den Leisten 34 gelangen. Die beschriebene Anordnung stellt eine Dichtung gegen den Durchtritt von Gut durch den Rostunterraum 17 dar.

Von großer Bedeutung für die Dichtfunktion ist das Verhältnis zwischen dem Abstand, der zwischen der Unterkante der Leiste 34 und dem Boden der Rinne 32 gebildet ist, und der Höhe des Guts in dem Spalt 35 zwischen der Leiste 34 und der Wand 33 der Rinne 32. Die Höhe dieses Spalts ist zweckmäßigerweise 3- bis 20-mal so groß wie der genannte Abstand, weiter vorzugsweise etwa 8- bis 12-mal so groß. In einem bewährten Ausführungsbeispiel liegt der Abstand zwischen der Unterkante der Leiste 34 und dem Boden der Rinne 32 bei 2 bis 5 mm und beträgt die Höhe der Wand 33 80 mm.

Falls der Widerstand, den das Gut beim Durchtritt dieser Dichtungsanordnung vorfindet, in speziellen Fällen nicht ausreichen sollte, kann die Rinne 32 durch Federkraft nach oben gedrückt werden, damit der Rinnenboden sich im wesentlichen spaltfrei gegen die Unterkante der Leisten 34 anlegt. Jedoch wird es dieser Maßnahme normalerweise nicht bedürfen, weil das durch den Spalt 31 in die Rinne 32 gelangende Gut ständig in Längsrichtung aus ihr herausgefördert wird. Das Förderprinzip bringt es mit sich, dass die Leisten 34 sich in der stationären Rinne 32 nie gleichzeitig entgegen der Förderrichtung, aber stets gleichzeitig in Förderrichtung bewegen. Dadurch ist der auf das in der Rinne 32 befindliche Gut ausgeübte Fördereffekt in Förderrichtung stärker als entgegen der Förderrichtung. Am abgabeseitigen Ende der Rinne 32 ist diese offen, so dass das Gut dort herausfallen kann. Falls sich je nach Anordnung des Rosts und Art des Guts herausstellen sollte, dass auch am aufgabeseitigen Ende des Rosts Gut aus der Rinne 32 herausfällt, können dort geeignete Auffangmöglichkeiten (Raum 30) oder Dichtungen vorgesehen werden, die den Austritt verhindern. Aufgrund des Materialtransports in der Rinne in Förderrichtung wird es dieser Maßnahme jedoch normalerweise nicht bedürfen.

Der seitliche Abstand zwischen den Wänden 33 und den Leisten 34 ist so gewählt, dass sie unter keinen Betriebsbedingungen einander berühren oder so nah kommen können, dass das zwischen ihnen befindliche Gut zermahlen wird. Ihr Abstand soll demgemäß größer sein als die zu erwartenden seitlichen Verlagerungen der Leiste 34 aufgrund des Bewegungsspiels der Planke und der Wärmedehnungen.

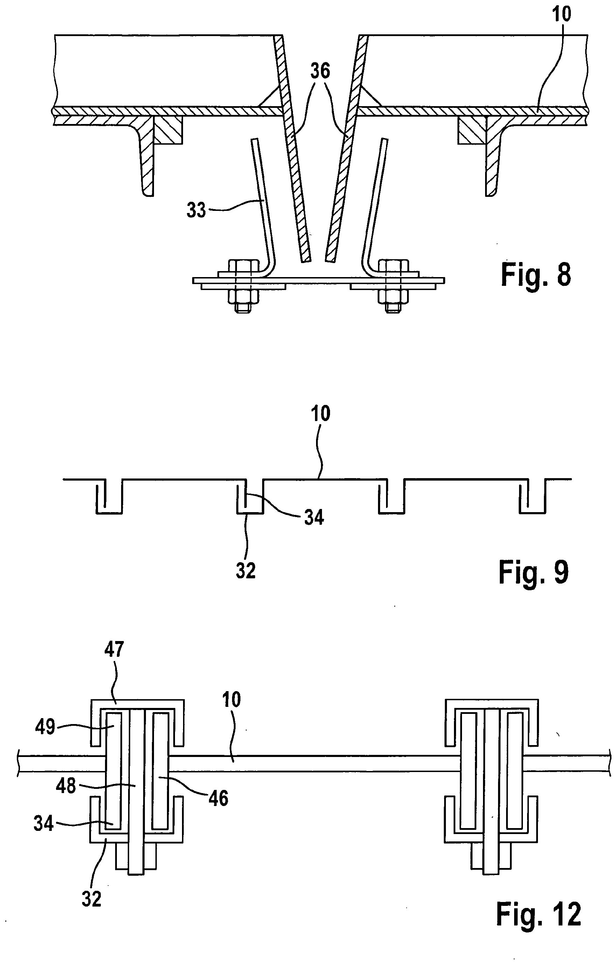

Die Gefahr des Zermahlens des Guts zwischen benachbarten Planken kann dadurch verringert werden, dass ihre einander gegenüberstehenden Seitenwände 36 gemäß dem in Fig. 8 dargestellten Beispiel, das nicht Teil der Erfindung ist, einen keilförmig sich nach oben erweiternden Spalt einschlie-ßen. Dadurch wird verhindert, dass sich das Gut im Spalt verkeilen kann, was zu einem Abheben der Planken führen könnte.

Gemäß einem weiteren Ausführungsbeispiel, das in Fig. 9 gezeigt ist, das nicht Teil der Erfindung ist, ist die Leiste 34 am Rand einer Planke und die abdichtend damit zusammenwirkende Rinne 32 am Rand der benachbarten Planke unterhalb derselben angeordnet.

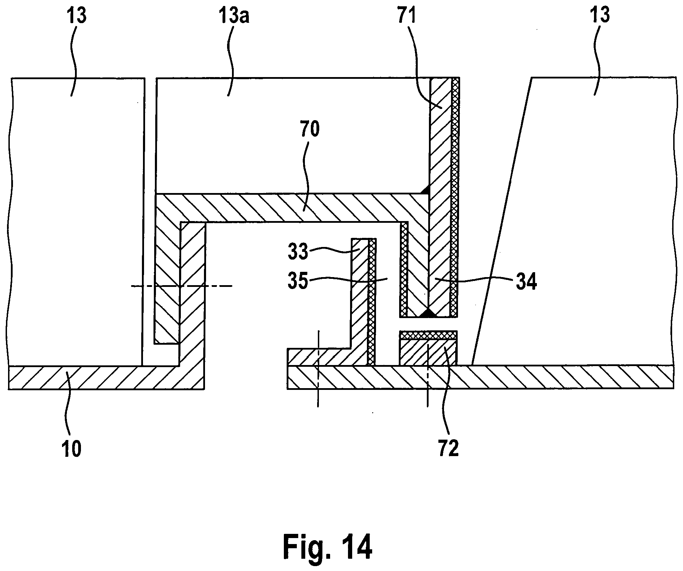

Ein erfindungsgemäßes Ausführungsbeispiel für die gegenseitige Abdichtung zwischen benachbarten Planken zeigt Fig. 14. Am Rand der in der Zeichnung links erscheinenden Platte 10 ist ein U-förmiges Profil 70 längs durchgehend befestigt, das eine Seitenwand 71 trägt. Diese Wand 71 begrenzt seitlich die Mulden (Ziffer 14 in Fig. 4 und 6), die durch Querstege 13 oberhalb der Planken 10 gebildet sind. Die Planken 13 werden oberhalb des U-Profils 70 durch 13a fortgesetzt.

Die Seitenwand 71 bildet einen nach unten ragenden Schenkel 34, der in das auf der (in der Zeichnung rechts) benachbarten Planke 10 gebildete Gutbett hinabragt und zur Bildung einer Labyrinthdichtung mit einer Wand 33 zusammenwirkt, die vom Rand dieser benachbarten Planke 10 hochragt. Die Wände 33, 34 schließen einen Spalt 35 ein und wirken in derselben Weise dichtend zusammen, wie dies oben unter Bezugnahme auf Fig. 7 erläutert wurde. Die kreuzschraffierten Flächen deuten eine Oberflächenpanzerung derjenigen Profilteile an, die infolge ihrer Relativbewegung zu den gegenüberstehenden Flächen bzw. Schüttungen einem erhöhten Verschleiß ausgesetzt sind. Aus demselben Grund ist unterhalb der Wand 34 ihrer Stirnfläche gegenüberliegend eine Leiste 72 vorgesehen, die mit der Stirnfläche der Wand 34 einen abdichtenden Spalt bildet und gleichfalls gepanzert ist. Derartige Panzerungen können auch bei den anderen Ausführungen der Abdichteinrichtungen vorgesehen sein.

Die Ausführung der Abdichteinrichtung gemäß Fig. 14 hat gegenüber manchen anderen oben erläuterten Abdichteinrichtungen den Vorteil, dass weniger relativ bewegte Dichtflächen einander gegenüberstehen und daher der Bauaufwand und die aufzuwendende Reibenergie geringer sind.

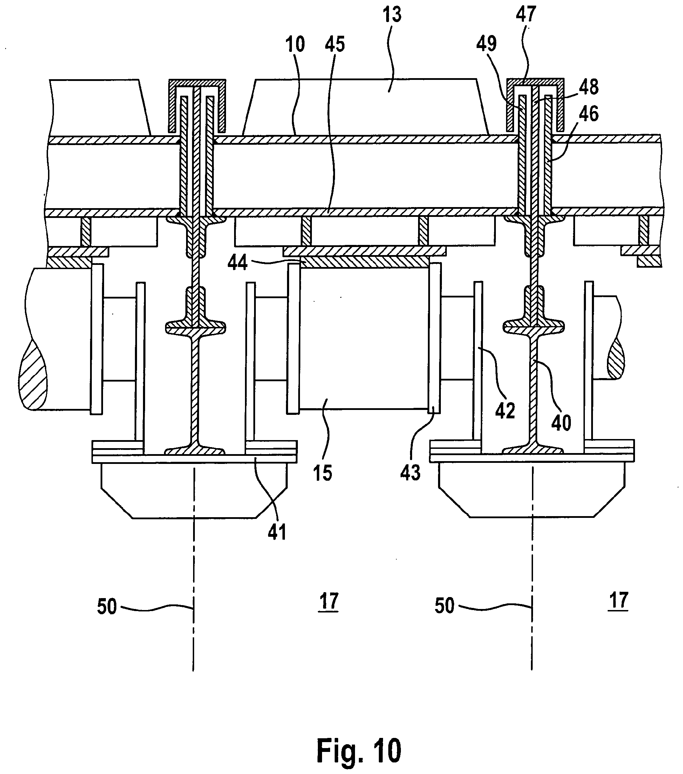

Einzelheiten einer für den praktischen Einsatz bevorzugten Konstruktion erkennt man in Fig. 10, 11, 13. Im Kühlergehäuse sind horizontale, parallele Längsträger 40 angeordnet, die den Rost tragen. In vorbestimmten Längsabständen sind daran Konsolen 41 befestigt, die jeweils Lagerböcke 42 für Rollen 15 tragen. Auf den Rollen 15 ruhen Rollplatten 44, die über Querträger 45 mit Seitenwangen 46 der Planken 10 starr verbunden sind. Jede Planke 10 wird von mehreren hintereinander angeordneten Rollen 15 getragen. Mindestens eine von diesen ist hin- und hergehend angetrieben, um der Planke die weiter oben beschriebene Förderbewegung zu erteilen oder die Planken werden unmittelbar mit hydraulischen Kolben-Zylinder-Einrichtungen angetrieben. Es sind Einrichtungen zur seitlichen Führung der Planken vorgesehen, beispielsweise seitlich führende Spurkränze 43 an den Rollen 15, die zur Breite der Rollplatten 44 passen.

Auf den Planken 10 sind in vorbestimmtem Längsabstand Querwände 13 befestigt, zwischen denen sich die weiter oben erwähnten Mulden 14 bilden.

Die Abdichtung des Spalts zwischen benachbarten Planken 10 wird dadurch bewirkt, dass die über die Planken hochragenden Teile 49 der Seitenwangen 46 der Planken 10 von einem stationären, im Querschnitt umgekehrt U-förmigen Dichtprofil 47 übergriffen werden, dessen seitliche Schenkel Leisten bilden, die ähnlich den Leisten 34 im Ausführungsbeispiel gemäß Fig. 7 in das auf den Planken befindliche Gutbett eintauchen. Sie kooperieren hinsichtlich der Dichtwirkung mit den über die Planken 10 hochragenden Abschnitten 49 der Seitenwangen 46, deren Anordnung und Funktion den Wänden 33 des Ausführungsbeispiels gemäß Fig. 7 entspricht. Das Dichtprofil 47 wird von Halterungen 48 getragen, die zwischen den Planken 10 und deren benachbarten Seitenwangen 46 hindurch ragen und von den Längsträgern 40 getragen werden.

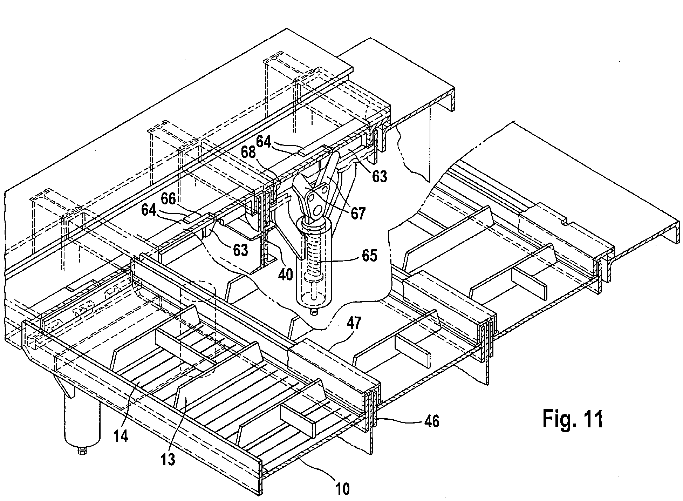

Die in Fig. 10 und 11 dargestellte oberseitige Abdichtung mittels des Dichtprofils 47 kann durch eine unterseitige Dichtanordnung der in Fig. 7 dargestellten Art ergänzt werden. Dies ist in Fig. 12 dargestellt. Man erkennt, dass die Seitenwangen 46, die oberseitig mit dem soeben beschriebenen Dichtprofil 47 zur Bildung der oberseitig von den Planken 10 angeordneten Dichtung zusammenwirken, nach unten Leisten 34 bilden, die in eine unterseitig gelegene Rinne 32 eintauchen.

Bei der Betrachtung der Fig. 10 erkennt man, dass es leicht möglich ist, den Unterraum unter benachbarten Planken 10 durch strichpunktiert angedeutete Wände 50 voneinander zu trennen. Es wird dann auch die Halterung 48 wandartig durchgehend ausgeführt, so dass keine Strömungsverbindung zwischen den Unterräumen 17 benachbarter Planken 10 verbleibt. Man kann die getrennten Unterräume gewünschtenfalls mit unterschiedlichem Druck beaufschlagen, um unterschiedliche Kühlluftmengen durch die auf den zugehörigen Planken befindliche Gutschicht zu drücken. Falls auf benachbarten Planken das Gutbett unterschiedliche Eigenschaften hat, beispielsweise unterschiedliche durchschnittliche Korngröße oder unterschiedliche Betthöhe oder unterschiedliche Temperatur, so kann dem durch unterschiedliche Luftzufuhr Rechnung getragen werden. Zu diesem Zweck sind unterschiedlich einstellbare Kühlluftquellen für die getrennten Unterräume 17 vorgesehen. Für die erläuterte Trennung der Rostunterräume durch Längstrennwände ist der erfindungsgemäße Rost besonders geeignet, weil die Längstrennwände mit den zwischen benachbarten Planken in Längsrichtung durchgehenden Dichtungsorganen verbunden werden können. Auch Querwände lassen sich im Rostunterraum 17 leicht vorsehen, die es gestatten, in Förderrichtung aufeinanderfolgende Abschnitte unterschiedlich zu belüften.

Die Luftdurchtrittsöffnungen 12 im Boden 38 der Planken 10 sind in Fig. 7 als quer zur Längsrichtung verlaufende Schlitze erkennbar. Unter jedem Schlitz 12 befindet sich ein Fangprofil 18, dessen nach hinten gewandte Kante 39 in Fig. 7 erkennbar ist.

Wie in Fig. 1, 4 und 5 schematisch dargestellt ist, fahren die Enden 20 der Planken 10 unter den Aufgabeabschnitt 4, um lückenlos daran anzuschließen. Damit durch den Spalt 21 zwischen der Oberseite des Plankenteils 20 und der Unterseite des Aufgabeabschnitts 4 nicht die unter Überdruck stehende Luft aus dem Rostunterraum 17 hindurchströmt oder Gut entgegen der Förderrichtung 11 in den Rostunterraum 17 übertritt, ist eine Dichtleiste 22 vorgesehen, die in der Ausführungsvariante der Fig. 4 dicht an die Stirnfläche des vorgeordneten Rostabschnitts 4 anschließt und durch Federkraft 23 auf die Oberfläche 24 des Plankenendes 20 gepresst wird. Damit die Dichtleiste 22 sich dicht auf die Oberseite 24 aufsetzen kann, ist diese in dem Plankenteil 20 durchgehend glatt und ohne Mulden 14 ausgeführt. Dies hat zur Folge, dass die Fläche 24, wenn sie sich nicht unterhalb des Aufgabeabschnitts 4 befindet, unmittelbar dem Verschleiß durch das noch sehr heiße Gut ausgesetzt ist und entsprechend temperatur- und verschleißfest ausgerüstet sein muss.

Will man diesen Aufwand vermeiden, kommt die Ausführungsalternative gemäß Fig. 5 in Betracht, die derjenigen gemäß Fig. 4 im Wesentlichen gleicht bis auf die Tatsache, dass auch das Plankenende 20, soweit es während des Vorhubs dem heißen Gut ausgesetzt sein kann, mit oberseitigen Mulden 14 ausgestattet ist. In diesem Fall ist die Dichtleiste 22 fest montiert und endet ihre Unterkante in geringem Abstand oberhalb der die Mulden 14 einschließenden Wände 13.

Solange die Mulden 14 sich unterhalb des Aufgabeabschnitts 4 befinden, sollen sie von der Druckluftversorgung abgeschnitten sein, weil sonst die Gefahr besteht, dass ein Teil des in den Mulden 14 befindlichen Schüttguts, das für den Schutz der Planken erforderlich ist, ausgeblasen wird. Dazu dient die folgend unter Bezugnahme auf Fig. 5 und 7 beschriebene Anordnung. Zumindest im hinteren Teil 20 der Planken 10 sind die Fangprofile 18 durch Seitenwangen 25 eingefasst. Darunter ist stationär eine Abschlussplatte 28 angeordnet, die sich in Förderrichtung 11 bis zum Ende des Aufgabeabschnitts 4 und in der Gegenrichtung bis zu einer Wand 29 erstreckt, durch die der Rostunterraum 17 nach hinten und zu den Seitenwänden hin abgeschlossen wird. Die Oberseite der Platte 28 ist gegen die unteren Stirnflächen 26 der Seitenwangen 25 abgedichtet, beispielsweise dadurch, dass die Platte 28 durch Federkraft gegen die Stirnflächen 26 gepresst wird. Auf diese Weise wird der unmittelbare Zutritt von Überdruckluft aus dem Rostunterraum 17 zu den Luftdurchtrittsöffnungen 12 verhindert, sobald sich diese Luftdurchtrittsöffnungen bzw. die ihnen zugeordneten Fangprofile 18 hinter der Vorderkante der Platte 28 befinden.

Um zu verhindern, dass Luft aus dem Rostunterraum entgegen der Förderrichtung zwischen der Oberseite der Platte 28 und den Fangprofilen 18 hindurch zu den Luftdurchtrittsöffnungen 12 strömt, sind zwischen aufeinander folgenden Fangprofilen 18 Querstege 37 vorgesehen, die bis zur Oberseite der Platte 28 hinabführen. Stattdessen kann auch vorgesehen sein, dass die Unterkanten der Fangprofile 18 abdichtend mit der Platte 28 zusammenwirken.

Für den Fall, dass Schüttgut in den Bereich unterhalb des Aufgabeabschnitts 4 gelangen sollte, kann dies außerhalb des überdruckbeaufschlagten Rostunterraums 17 in einem Sammelraum 30 (Fig. 5) aufgefangen und von dort von Zeit zu Zeit oder kontinuierlich abgesaugt werden.

Statt der durch die Platte 28 unterhalb des Rosts bewirkten Abdichtung ist es auch möglich, eine Abdeckung im Spalt 21 oberhalb des Rosts vorzusehen.

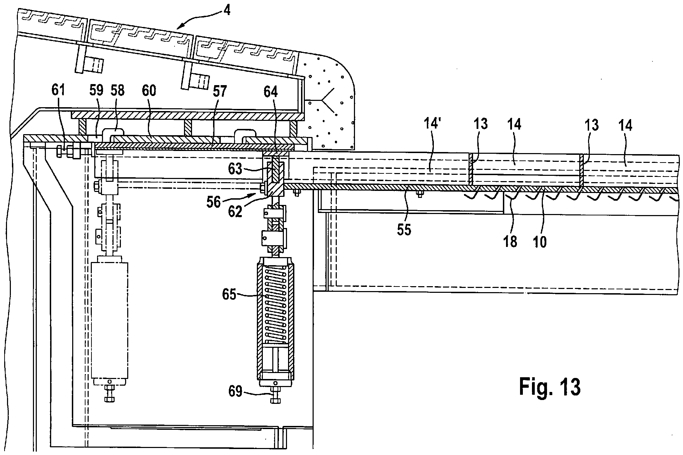

Eine weitere Möglichkeit des dichten Anschlusses des Rostabschnitts 5 an den Rostabschnitt 4 zeigen Fig. 11 und 13. Während die Planken 10 im Bereich der Mulden 14 luftdurchlässig mit Fangprofilen ausgeführt sind, wie es oben beschrieben wurde, ist das Plankenende im Bereich der Mulde 14' mit einem geschlossenen, nicht luftdurchlässigen Boden 55 ausgerüstet. Nur dieser nicht luftdurchlässige Abschnitt der Planke fährt unter den Rostabschnitt 4, so dass die Notwendigkeit entfällt, eine besondere Abschlussplatte (Nr. 28 in Fig. 5) vorzusehen, die den Luftdurchtritt hindert. Dieser nicht luftdurchlässige Abschnitt 55 der Planke wird durch das in der Mulde 14' gefangene Gut vor dem Einfluss der hohen Temperatur des vom Rostabschnitt 4 kommenden Guts geschützt.

Zum Abdichten des Rostabschnitts 5 gegenüber dem Rostabschnitt 4 ist eine Dichtanordnung vorgesehen, die einerseits unter dem Rostabschnitt 4 aus einer parallel zum Rostabschnitt 5 angeordneten Dichtplatte 57 und andererseits am hinteren Ende jeder Planke aus einer damit zusammenwirkenden Dichteinrichtung 56 besteht. Die Dichtplatte 57, bei der mit Verschleiß gerechnet werden muss, ist leicht auswechselbar mittels Haken 58 in Löcher 59 einer Tragplatte 60 eingehängt und wird mittels einer Schraube 61 in der eingehängten Position fixiert. Nach Lösen der Schraube 61 kann sie leicht herausgenommen und ausgetauscht werden. Die Dichteinrichtung 56 am hinteren Ende der Planke 10 bewegt sich mit der Planke zwischen zwei Extremstellungen, von denen die vorderste mit durchgezogenen Linien und die hinterste strichpunktiert in Figur 13 angedeutet ist.

Die Dichteinrichtung 56 umfasst ein am hinteren Ende der luftundurchlässigen Platte 55 befestigtes U-Profil 62, zwischen dessen Schenkeln der Steg 63 eines T-Profils in einer quer zur Längsrichtung der Planke 10 liegenden Ebene beweglich geführt ist. Das T-Profil wird mit seinem Flansch 64 durch eine Feder 65 dichtend gegen die Dichtplatte 57 gedrückt.

Wie man am besten in Fig. 11 erkennt, ist das T-Profil 63, 64 in der Mitte geteilt. Die beiden Teile sind mit einem Z-Stoß 66 gefügt, damit auch dann kein materialdurchlässiger Spalt entsteht, wenn die beiden Teile sich seitlich auseinander bewegen. Beide Teile werden je für sich durch Schräglenker 67 derart von der Feder 65 beaufschlagt, dass sie nicht nur nach oben gegen die Dichtplatte 57 gepresst werden, sondern auch seitlich nach außen. Dadurch werden ihre ebenfalls mit einem Flansch 68 versehenen Enden gegen die Außenflächen des oben unter Bezugnahme auf Fig. 10 beschriebenen U-Profils 47 gedrückt. So wird die Mulde 14' an ihrem hinteren Ende über ihren gesamten Querschnitt gegenüber den stationären Teilen 57 und 47 sowohl horizontal als auch vertikal abgedichtet. Diese Abdichtung bleibt in jeder Phase des Hubs erhalten, da die Dichteinrichtung 56 sich mit der Planke bewegt. Die Dichtkraft, mit welcher der Flansch 64 an den Dichtflächen der Platte 57 und des Profils 47 anliegt, wird durch die Feder 65 bestimmt. Deren Vorspannung kann durch die Verstellschraube 69 eingestellt werden.

Die in Fig. 11 dargestellte Ausführung, die nicht Teil der Erfindung ist, setzt voraus, dass die Dichtspalte zwischen benachbarten Planken von einem nach unten offenen U-Profil 47 (siehe Erläuterungen zu Fig. 10) überdeckt sind. Gegen die Seitenflächen dieser U-Profile dichten die Enden der T-Profile 63, 64 ab. Wenn die Abdichtung zwischen benachbarten Planken so ausgeführt ist, wie es in Fig. 14 dargestellt ist, liegt das eine Ende des T-Profils 63, 64 an der Außenfläche der Wand 71, 34 der benachbarten Planke an und dichtet dort an. Am anderen Ende des T-Profils wird eine solche Abdichtung nicht benötigt.

Da die einzelnen Planken sich jeweils gesondert von den übrigen Planken bewegen, besteht die Möglichkeit, durch Änderung ihrer Hublänge oder Hubfrequenz ihren auf das Gut ausgeübten Fördereinfluss und damit die Fördergeschwindigkeit des auf ihnen befindlichen Guts gesondert von den übrigen Planken bzw. des darauf liegenden Guts einzustellen. Diese Tatsache wird erfindungsgemäß dadurch genutzt, dass die ausgewählten Eigenschaften des auf einer bestimmten Planke oder einer Gruppe von Planken liegenden Guts, die für die Bestimmung der Fördergeschwindigkeit wesentlich sein können, mittels geeigneter Sensoren gemessen werden und davon abhängig die Fördergeschwindigkeit der Planke (genauer gesagt: ihre Hubfrequenz oder ihre Hublänge oder beides) selbsttätig beeinflusst wird. Beispielsweise wird die Temperatur des auf einer Planke liegenden Gutbetts durch Strahlungsmessung der Gutbettoberfläche oder durch Messung der unmittelbar oberhalb dieses Betts herrschenden Temperatur der Kühlluft festgestellt oder es kann am Kühlerende mit Thermoelementen oder Pyrometern ein Temperaturprofil über die Rostbreite ermittelt werden. Es ist zweckmäßig, dabei pro Planke je eine Messstelle zu verwenden.

Davon abhängig kann die Fördergeschwindigkeit der Planke ständig geregelt werden. Wenn die Temperatur anwächst, wird die Geschwindigkeit gesenkt, um die Aufenthaltszeit des Guts im Kühlbereich zu verlängern, bzw. umgekehrt. Statt einer ständigen Regelung besteht auch die Möglichkeit, periodisch die Geschwindigkeit zu senken, wenn eine Temperaturerhöhung festgestellt wird, und umgekehrt.

Es besteht auch die Möglichkeit, diese Verstellung oder Regelung der Fördergeschwindigkeit gezielt gegen bestimmte, unerwünschte Betriebszustände einzusetzen. Manches Gut neigt zur Bildung von Heißströmen, zum Beispiel randgängigen Feinklinkers ("Red River"), der durch Temperaturscanner lokalisiert und jeweils einzelnen Planken zugeordnet werden kann. Für die betreffenden Planken kann dann die Hublänge (oder die Hubfrequenz oder beides) regeltechnisch so lange reduziert werden, bis sich das Temperaturprofil über die Rostbreite ausgeglichen hat. Durch die Reduzierung der Hublänge in der heißeren Zone erhöht sich dort die Verweilzeit des Brennguts und dessen Kühlung wird daher intensiviert.

Man erkennt, dass dank der Erfindung beliebig lange Kühlroste realisiert werden können, wobei im Vorhub gegenüber dem Rost keine Reibverluste auftreten. Während des Rückhubs tritt zwar Reibung zwischen den im Rückhub befindlichen Planken und der darauf liegenden Schüttung auf; deren rückfördernder Einfluss ist aber gering. Daraus ergibt sich eine hohe Effizienz des Materialtransports. Die Abdichtung zwischen benachbarten Planken bzw. dem Gehäuse kann außerhalb des Heißbereichs untergebracht werden. Auch sind keine Förderelemente innerhalb des Heißbereichs erforderlich. Die bewegten Teile können durch gutfangende Mulden vor Verschleiß und Hitzeeinfluss weitgehend geschützt werden. Die Hublänge kann groß gewählt werden, beispielsweise zwischen 100 und 1000 mm, vorzugsweise zwischen 300 und 600 mm. Daraus ergibt sich eine niedrige Hubfrequenz und ein entsprechend geringer Verschleiß sowie eine geringe Beanspruchung der Antriebsorgane. Die Hublänge kann über die Kühlerbreite unterschiedlich eingestellt werden, um unterschiedliche Guteigenschaften quer über die Bettbreite zu berücksichtigen und insbesondere um Randgängigkeit des Klinkers ("Red River") zu vermeiden. Es kann eine gleichmäßige Luftbeaufschlagung über die Rostbreite erreicht werden, weil diejenigen Bereiche bekannter Roste, in denen die Luftzufuhr dort durch Dichtungs- oder Antriebselemente gesperrt ist, fehlen bzw. auf ein Mindestmaß reduziert werden können. Der Rostunterraum kann in Quer- und Längsrichtung durch Trennwände abgeteilt werden, so dass eine gezielte Belüftung, zum Beispiel des Randbereichs, auch ohne flexible Belüftungsleitungen möglich ist.

## Patentansprüche

1. Einem Brennofen nachzuschaltende Vorrichtung zum Kühlen des gebrannten Schüttguts, nämlich Zementklinker, die einen eine Schicht (8) des Schüttguts in einer von einem Aufgabeende zu einem Abgabeende gerichteten Förderrichtung (11) fördernden Rost (5) aufweist, der eine Mehrzahl von nebeneinander angeordneten, gesondert vor und zurück angetriebenen, langgestreckten Planken (10) umfasst, deren Antrieb so eingerichtet ist, dass der Rückhub benachbarter Planken (10) ungleichzeitig und ihr Vorhub gleichzeitig stattfindet und die zur Kühlluft-Durchströmung von unten nach oben eingerichtet sind, **dadurch gekennzeichnet, dass** zwischen benachbarten Planken (10) eine Abdichteinrichtung vorgesehen ist, die ein längs durchgehendes auf einer der Planken (10) befestigtes U-förmiges Profil (70) mit einem nach unten ragenden Schenkel umfasst, wobei der Schenkel (34) in das auf der benachbarten Planke (10) gebildete Gutbett hinabragt und zur Bildung einer Labyrinthdichtung mit einer Wand (33) zusammenwirkt, die vom Rand dieser benachbarten Planke (10) hochragt, und wobei das U-förmige Profil (70) eine Seitenwand (71) trägt, wobei die Seitenwand (71) den nach unten ragenden Schenkel (34) bildet.

2. Vorrichtung nach Anspruch 1, **dadurch gekennzeichnet, dass** stationäre Randplanken oder stationäre Zwischenplanken zwischen angetriebenen Planken vorgesehen sind.

3. Vorrichtung nach einem der Ansprüche 1 oder 2, **dadurch gekennzeichnet, dass** das Aufgabeende des Rosts (5) von einem sich oberhalb der Rostebene erstreckenden Aufgabeabschnitt (4) zumindest zeitweise überdeckt ist.

4. Vorrichtung nach Anspruch 3, **dadurch gekennzeichnet, dass** zwischen dem Aufgabeabschnitt (4) und dem Rost (5) eine Abdichtung (22) vorgesehen ist.

5. Vorrichtung nach Anspruch 3 oder 4, **dadurch gekennzeichnet, dass** die Rostoberfläche mit guthaltenden Vertiefungen (14) ausgerüstet ist, die Luftdurchtrittsöffnungen (12) enthalten.

6. Vorrichtung nach einem der Ansprüche 4 oder 5, **dadurch gekennzeichnet, dass** auch das Aufgabeende des Rosts (5) guthaltende Vertiefungen (14) aufweist und deren Luftdurchtrittsöffnungen (12) in dem von dem Aufgabeabschnitt (4) überdeckten Bereich von der Luftzufuhr abgesperrt sind.

7. Vorrichtung nach einem der Ansprüche 2 bis 6, **dadurch gekennzeichnet, dass** die Hublänge zwischen 100 und 1.000 mm liegt.

8. Vorrichtung nach Anspruch 7, **dadurch gekennzeichnet, dass** die Hublänge zwischen 300 und 600 mm liegt.

9. Vorrichtung nach einem der Ansprüche 1 bis 8, **dadurch gekennzeichnet, dass** der Rost (5) frei ist von Förderorganen oberhalb des Rosts.

## Claims

1. Apparatus to be connected downstream of a kiln for cooling the fired bulk material, namely cement clinker, which apparatus has a grate (5) which conveys a layer (8) of the bulk material in a conveying direction (11) which is directed from a feed end to a delivery end, which grate (5) comprises a plurality of elongate planks (10) which are arranged next to one another, are driven to and fro separately, and the drive of which is configured in such a way that the return stroke of adjacent planks (10) does not take place at the same time and their forward stroke takes place at the same time, and which planks (10) are configured for the cooling air throughflow from bottom to top, **characterized in that** a sealing device is provided between adjacent planks (10), which sealing device comprises a longitudinally continuous U-shaped profile (70) which is fastened on one of the planks (10) and has a downwardly protruding limb, the limb (34) protruding into the material bed formed on the adjacent plank (10) and, in order to form a labyrinth seal, interacting with a wall (33) which protrudes upwards from the edge of this adjacent plank (10), and the U-shaped profile (70) supporting a side wall (71), the side wall (71) forming the downwardly protruding limb (34).

2. Apparatus according to Claim 1, **characterized in that** stationary edge planks or stationary intermediate planks are provided between driven planks.

3. Apparatus according to either of Claims 1 or 2, **characterized in that** the feed end of the grate (5) is covered at least intermittently by a feed portion (4) which extends above the grate plane.

4. Apparatus according to Claim 3, **characterized in that** a seal (22) is provided between the feed portion (4) and the grate (5).

5. Apparatus according to Claim 3 or 4, **characterized in that** the grate surface is equipped with material-holding depressions (14) which contain air passage openings (12).

6. Apparatus according to either of Claims 4 or 5, **characterized in that** the feed end of the grate (5) also has material-holding depressions (14), and their air passage openings (12) are shut off from the air supply in the region which is covered by the feed portion (4).

7. Apparatus according to one of Claims 2 to 6, **characterized in that** the stroke length lies between 100 and 1000 mm.

8. Apparatus according to Claim 7, **characterized in that** the stroke length lies between 300 and 600 mm.

9. Apparatus according to one of Claims 1 to 8, **characterized in that** the grate (5) is free from conveying members above the grate.

## Revendications

1. Dispositif destiné à être placé en aval d'un four de cuisson pour refroidir la matière en vrac cuite, à savoir du clinker de ciment, qui présente une grille (5) transportant une couche (8) de la matière en vrac dans une direction de transport (11) orientée d'une extrémité de chargement à une extrémité d'évacuation, qui comprend une pluralité de planches allongées (10) agencées les unes à côté des autres, entraînées séparément vers l'avant et vers l'arrière, dont l'entraînement est conçu de telle sorte que la course de retour de planches voisines (10) a lieu de manière non simultanée et leur course d'avance a lieu de manière simultanée, et qui sont conçues pour le passage d'air froid de bas en haut, **caractérisé en ce qu'**un appareil d'étanchéité est prévu entre des planches voisines (10), lequel comprend un profilé en forme de U (70) longitudinalement continu et fixé sur l'une des planches (10) avec une branche faisant saillie vers le bas, la branche (34) faisant saillie vers le bas dans le lit de produit formé sur la planche voisine (10) et coopérant avec une paroi (33) qui s'étend vers le haut à partir du bord de cette planche voisine (10) pour former un joint d'étanchéité en labyrinthe, et le profilé en forme de U (70) supportant une paroi latérale (71), la paroi latérale (71) formant la branche faisant saillie vers le bas (34).

2. Dispositif selon la revendication 1, **caractérisé en ce que** des planches de bord stationnaires ou des planches intermédiaires stationnaires sont prévues entre des planches entraînées.

3. Dispositif selon l'une quelconque des revendications 1 ou 2, **caractérisé en ce que** l'extrémité de chargement de la grille (5) est recouverte au moins temporairement par une section de chargement (4) s'étendant au-dessus du plan de la grille.

4. Dispositif selon la revendication 3, **caractérisé en ce qu'**un joint d'étanchéité (22) est prévu entre la section de chargement (4) et la grille (5).

5. Dispositif selon la revendication 3 ou 4, **caractérisé en ce que** la surface de la grille est équipée de cavités de retenue de produit (14) qui contiennent des orifices de passage d'air (12).

6. Dispositif selon l'une quelconque des revendications 4 ou 5, **caractérisé en ce que** l'extrémité de chargement de la grille (5) présente également des cavités de retenue de produit (14) et dont les orifices de passage d'air (12) sont bloqués à l'alimentation en air dans la zone recouverte par la section de chargement (4) .

7. Dispositif selon l'une quelconque des revendications 2 à 6, **caractérisé en ce que** la longueur de la course est comprise entre 100 et 1 000 mm.

8. Dispositif selon la revendication 7, **caractérisé en ce que** la longueur de la course est comprise entre 300 et 600 mm.

9. Dispositif selon l'une quelconque des revendications 1 à 8, **caractérisé en ce que** la grille (5) est exempte d'organes de transport au-dessus de la grille.
